# EUROPÄISCHE PATENTSCHRIFT

(11) **EP 1 160 135 B1**
(45) Veröffentlichungstag und Bekanntmachung des Hinweises auf die Patenterteilung: **01.12.2004**
(21) Anmeldenummer: 01107091.9
(22) Anmeldetag: 22.03.2001
(51) Int. Cl.: B60R 21/13, B60N 2/427, B60N 2/48

(54) **Überroll-Schutzsystem für Kraftfahrzeuge**
Roll over protection system for motor vehicles
Système d'arceau de sécurité pour des véhicules automobiles

(30) Priorität: 31.05.2000 DE 10026978
(43) Veröffentlichungstag der Anmeldung: 05.12.2001
(73) Patentinhaber: ISE Innomotive Systems Europe GmbH, 51702 Bergneustadt (DE)
(72) Erfinder: Schulte, Michael, 57462 Olpe (DE)
(74) Vertreter: Fuchs Mehler Weiss & Fritzsche

(56) Entgegenhaltungen:
- EP-A- 0 850 808
- DE-A- 3 930 171

## Beschreibung

Die Erfindung bezieht sich auf ein Überroll-Schutzsystem für Kraftfahrzeuge in Kassettenbauweise, das jeweils einem Fahrzeugsitz zugeordnet ist.

Überrollschutzsysteme, die in mannigfaltigen Ausführungsformen, beispielsweise durch die DE 43 14 538 A1 und die DE 195 23 790 A1 bekannt geworden sind, sollen typischerweise die Insassen von Cabriolets oder Sportwagen im Falle eines Überschlages vor einem Aufprall des Körpers auf die Fahrbahn bzw. den Erdboden schützen. Sie sind bei einer typischen Ausführungsform in Kassetten-Bauweise direkt hinter den Fahrzeugsitzen angeordnet und weisen einen geführten Überrollkörper, vorzugsweise einen Überrollbügel auf, der im Normalzustand, gegen die Kraft einer Feder vorgespannt, mittels einer Haltevorrichtung in einer unteren Ruhelage gehalten wird, und im Gefahrenfall, ausgelöst durch entsprechende Sensoren am Fahrzeug, sehr schnell in eine obere verriegelte, schützende Endposition gefahren werden kann. Neben vorgespannten Federn als Energiespeicher und Schnellantrieb kommen auch andere Systeme in Betracht, wie beispielsweise pyrotechnische Antriebe, hydraulische oder pneumatische Systeme, aber auch hochdrehende elektromotorische Spindelantriebe oder dergleichen.

Derartige ausfahrbare Überrollbügel finden insbesondere bei solchen Fahrzeugen Verwendung, bei denen aus optischen Gründen auf einen starren, d.h. fest eingebauten Überrollbügel, verzichtet wird.

Wenn der Überrollbügel mit seiner Kassette unmittelbar hinter der Rückenlehne des Fahrzeugsitzes angebracht ist, befindet er sich in unmittelbarer räumlicher Nähe zu der Kopfstütze, die typischerweise oben auf der Rückenlehne höhenverstellbar angebracht ist, damit sie in eine für die Insassen komfortable bzw. sicherheitsmäßig notwendige Position bringbar ist. Es bietet sich daher an, die Kopfstütze mit dem Überrollbügel zu integrieren.

Durch die DE 39 30 171 C2 ist es bekannt, den Überrollbügel mit der Kopfstütze in der Weise zu integrieren, daß die Kopfstütze oben und seitlich mit einer nutartigen Vertiefung versehen ist, welche den Überrollbügel aufnimmt, wenn dieser in seiner Ruhestellung steht. Der Überrollbügel tritt dann weder optisch noch sicherheitsmäßig störend in Erscheinung.
In diesem bekannten Fall ist jedoch die Kopfstütze mit Nachteil nicht höhenverstellbar. Die Integration des Überrollbügels in die Kopfstütze hat den alleinigen Zweck der Abdeckung des Bügels.

Durch die DE 38 22 461 A1 ist ein Überrollschutzsystem bekannt geworden, das in der Weise mit der Kopfstütze integriert ist, indem das obere Ende des U-förmigen Überrollbügels unmittelbar als Kopfstütze ausgebildet ist und ein Kopfstützenpolster festlegt. Dieses Kopfstützenpolster ist enlang den Schenkeln des Überrollbügels und relativ zu diesen höhenverstellbar.
Konstruktionsbedingt ist allerdings das Kopfstützenpolster nur manuell höhenverstellbar.

Durch die DE 39 27 265 A1 ist eine Kopfstütze mit integrierter Überrollschutzfunktion bekannt geworden, die sich, angetrieben durch einen Elektromotor, stufenlos in verschiedene Stellungen verfahren läßt, wobei aus jeder Stellung heraus das Überrollschutzsystem bei einer Gefahrensituation in die maximale Endstellung gebracht werden kann. Das bekannte System weist ein Gehäuse aus Blechformteilen auf, welches mit dem Fahrzeugaufbau verschraubbar ist und welches hinter den Rücksitzen des Cabriolets angeordnet wird. Im Gehäuse ist ein U-förmiger Überrollbügel in Form eines entsprechend gebogenen Stahlrohres verschiebbar mittels Führungsrollen gelagert. Der Überrollbügel ist dabei mit einem die Kopfstütze bildenden Kopfstützkissen versehen, d.h. ebenfalls mit der Kopfstütze voll integriert.

An dem Überrollbügel greifen zwei Antriebs-Druckfedern an, die im vorgespannten Zustand gehalten werden. Zwischen den Druckfedern ist eine elektromotorische, fahrzeugfest gehalterte Antriebseinheit mit Getriebe, Zahnriemen und einem Ritzel, das mit einer Verzahnung am Überrollbügel in Wirkeingriff steht, angeordnet. Der Zahnriemen ist dabei mit dem Getriebe über ein Zahnrad gekoppelt, das über eine Kupplung mit radial verschiebbaren Kugelelementen von einer Welle eines mit dem Getriebe in Wirkeingriff stehendem Zahnriemenantriebes angetrieben wird. Diese Welle steht mit einem Auslösemagneten in Verbindung, der im Gefahrenfall in der Kupplung die Welle vom Zahnrad trennt, wodurch der Zahnriemen vom Getriebe abgekoppelt wird. Dadurch wird der Überrollbügel freigegeben und wird mittels der Druckfedern in seine Endposition gebracht. Dieses bekannte Überrollschutzsystem, bei dem es insbesondere darauf ankommt, im Gefahrenfall den Antrieb für das kontinuierliche Verfahren der Kopfstütze zu entkoppeln, hat insbesondere den Nachteil, daß
- die Antriebsanordnung zum kontinuierlichen Verfahren des Überrollbügels, der sogenannte Komfortantrieb, der gleichzeitig zur Höheneinstellung der Kopfstütze dient, relativ komplex und im Hinblick auf den Zahnriementrieb auch relativ reparaturanfällig ist, sowie daß
- das Auslösesystem zwischen Überrollbügel und Auslösemagnet zur Freigabe des Überrollbügels im Überschlagfall komplex und nur umständlich nach einer Auslösung wieder in die Ausgangslage zu bringen ist.

Im bekannten Fall ist daher nur eine sehr komplexe, anfällige Entkopplung sowie Wieder-Einkopplung des kontinuierlichen Antriebs gegeben.

Dies gilt prinzipiell, wenn auch im wesentlich verminderten Umfang, für das durch die DE 199 06 912 C1 bekannt gewordene Überrollschutzsystem, das eine Antriebsanordnung für ein kontinuierliches Verfahren des Überrollbügels besitzt, bestehend aus einer Elektromotor/Getriebeanordnung mit einer Gewindespindel vorgegebener Länge sowie aus einer in einem äußeren Kastenprofil verschiebbaren Traverse, die eine Mutter zum Wirkeingriff mit der Gewindespindel besitzt, und die mit dem Überrollbügel lösbar verbunden ist.

Dabei ist eine Integration der Kopfstütze in den Überrollkörper möglich, indem am oberen Teil des Überrollbügels ein die Kopfstütze bildendes Kopfstützenpolster angeformt ist.

Prinzipiell ist es jedoch auch denkbar, die Kopfstütze von dem Überrollbügel zu trennen, indem neben dem Überrollbügel parallel zu diesem mindestens ein weiterer langgestreckter, in dem äußeren Kastenprofil geführter Formkörper auf der Traverse befestigt ist, an dem im oberen Bereich Insassen zugewandt vor dem Überrollbügel ein die Kopfstütze bildendes Kopfstützenpolster angeformt ist.

Durch die EP 0 850 808 A ist ein Überrollschutzsystem bekannt geworden, mit den Merkmalen des Oberbegriffs des Anspruchs 1.

Der Erfindung liegt die Aufgabe zugrunde, ein Überroll-Schutzsystem in Kassettenbauweise, das jeweils einem Fahrzeugsitz zugeordnet ist, und einen ausführbaren Überrollkörper besitzt, zu schaffen, das eine mit dem Überrollkörper integrierte Kopfstütze aufweist, die mittels eines separaten Antriebes in der eingefahrenen Ruhestellung des Überrollkörpers kontinierlich verstellbar ist, mit einem separaten Antrieb, der unkompliziert bei einer Aufstellbewegung des Überrollkörpers entkoppelbar ist.

Die Lösung dieser Aufgabe gelingt erfindungsgemäß mit
- einem länglichen Überrollkörper, der in einer fahrzeugfest angebrachten Außenkassette zwischen einer unteren Ruhestellung und einer oberen Schutzstellung längsverschiebbar aufgenommen ist und ein Halteglied aufweist, das in der Ruhestellung in lösbarer Wirkverbindung mit einem sensorgesteuerten Auslösesystem steht,
- einer mit dem Überrollkörper integrierten Kopfstütze, die an mindestens einer Führungsstange angebracht ist, die parallel zur Längsrichtung des Überrollkörpers ebenfalls längsverschiebbar in der Außenkassette aufgenommen ist und der ein zusätzliches elektrisches Antriebssystem zum kontinuierlichen Verfahren der Kopfstütze unabhängig von der Verstellung des Überrollkörpers zugeordnet ist, das einen an der Außenkassette angebrachten Elektromotor aufweist, auf dessen Antriebswelle ein erstes Zahnrad angebracht ist, das mit einem zweiten Zahnrad entkoppelbar kämmt, das mit dem Überrollkörper verbunden ist und mit einem an der Führungsstange ausgebildeten Zahnsegment im Wirkeingriff steht.

Bei einer Auslösung des Überrollkörpers wird das zusätzliche Antriebssystem auf sehr einfache Weise dadurch entkoppelt, daß das zweite Zahnrad durch die Aufstellbewegung des Überrollkörpers von dem ersten Zahnrad abhebt und sich danach frei drehen kann. Ebenso ist bei einer Reversierbewegung eine einfache Kopplung der Zahnräder möglich.

Für die Integration der Kopfstütze mit dem Überrollkörper stehen mit Vorteil zwei Alternativen zur Verfügung. Gemäß einer ersten Weiterbildung läßt sich eine kompakte, geschlossene Integration mit einem System erzielen, bei dem die Kopfstütze einen Hohlraum zur Aufnahme des oberen Teiles des Überrollkörpers aufweist, dessen axiale Tiefe so bemessen ist, daß die Kopfstütze in der Ruhestellung ohne Beeinträchtigung durch den Überrollbügel in ihre unterste Position verfahrbar ist.

Gemäß einer zweiten Weiterbildung der Erfindung läßt sich eine Integration mit einer massiveren Kopfstütze mit einem System durchführen, bei dem die Kopfstütze mit ihrer Führungsstange insassenzugewandt vor dem Überrollkörper angeordnet ist und ein Mitnehmerelement vorgesehen ist, derart, daß durch die Aufstellbewegung des Überrollkörpers die Kopfstütze in die obere Endstellung verfahrbar ist.

Um eine gute, spannungsfreie Ent- und Wiedereinkopplung der beiden Zahnräder des Zahntriebes zu erreichen, ist ein System vorgesehen, bei dem das erste Zahnrad elastisch nachgebend auf der Antriebswelle des Elektromotors gelagert ist.

Alternativ läßt sich dieses Ziel mit einem System erreichen, bei dem das erste Zahnrad fest auf der Antriebswelle des Elektromotors angebracht und der Elektromotor elastisch an der Außenkassette gelagert ist.

Für einen Wirkeingriff des Zahntriebes mit der Führungsstange der Kopfstütze ist ein System vorgesehen, bei dem die Führungsstange im unteren Abschnitt eine in der Stange einstückig ausgeformte Zahnreihe als Zahnsegment aufweist.

Alternativ dazu kann ein System vorgesehen werden, bei dem an der Führungsstange im unteren Abschnitt eine separate Zahnstange als Zahnsegment angebracht ist. Die Auswahl aus diesen Alternativen richtet sich nach den jeweiligen konstruktiven und fertigungstechnischen Möglichkeiten.

Eine besonders einfache Konstruktion läßt sich mit einem System erzielen, bei dem an dem unteren Ende des Überrollkörpers eine Traverse angebracht ist, die sich über die Breite des Überrollkörpers erstreckt und an der das zweite Zahnrad gelagert und das Halteglied befestigt ist, wobei das Auslösesystem fahrzeugfest in der Außenkassette angebracht ist.

Anhand von in den Zeichnungen dargestellten Ausführungsbeispielen wird die Erfindung unter Aufzeigen weiterer Ausgestaltungen näher erläutert.

Es zeigen:
- Fig. 1: in einer schematischen Längsschnitt-Darstellung eine erste Ausführungsform des erfindungsgemäßen Überroll-Schutzsystem mit einer separat, mittels eines entkoppelbaren Zahntriebes elektromotorisch verstellbaren Kopfstütze in dem Grundzustand, mit dem Überrollkörper in der Ruhestellung und vollständig eingefahrener Kopfstütze,
- Fig. 2: das Überroll-Schutzsystem nach Fig. 1 mit dem Überrollkörper in der Ruhestellung und der Kopfstütze in der vollständig ausgefahrenen Position,
- Fig. 3: einen vergrößerten Ausschnitt aus Fig. 1 unter näherer Darstellung des elektromotorisch betätigten Zahntriebes und dessen Wirkeingriff mit einer die Kopfstütze bewegenden Führungsstange,
- Fig. 4: den Beginn der Reversierbewegung des vollständig ausgefahrenen Überrollkörpers des Schutzsystems nach Fig. 1,
- Fig. 5: den Beginn der Aufstellbewegung des Überrollkörpers des Schutzsystems nach Fig. 1 nach einer Auslösung bei ausgefahrener Kopfstütze, und
- Fig. 6: in einer schematischen Längsschnitt-Darstellung eine zweite Ausführungsform des erfindungsgemäßen Überroll-Schutzsystems mit einer insassenzugewandt vor dem Überrollkörper angeordneten Kopfstütze.

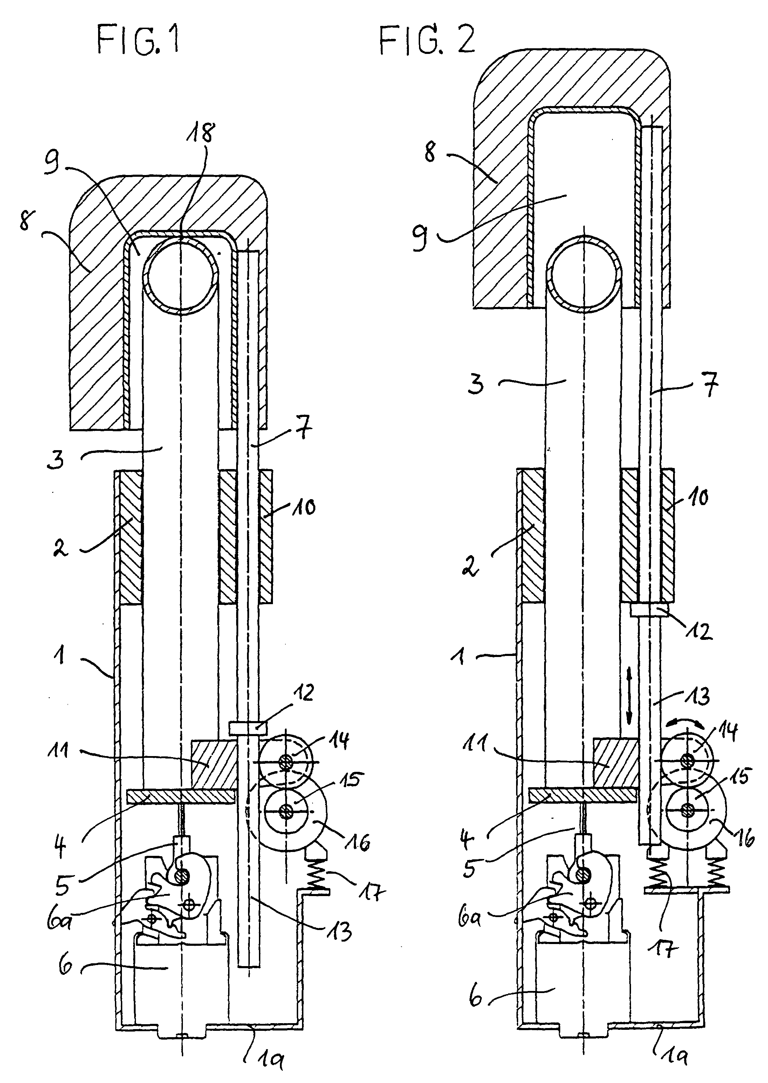

Die Fig. 1 zeigt eine bevorzugte Ausführungsform des erfindungsgemäßen Überroll-Schutzsystems, ausgeführt in sogenannter Kassettenbauweise. Dieses kassettenförmige Überroll-Schutzsystem besteht aus einer fahrzeugverbundenen Außenkassette 1, z.B. einem Kastenprofilkörper, in der Führungen 2 für einen Überrollkörper 3 angebracht sind. Dieser Überrollkörper 3 besteht im dargestellten Beispiel aus einem U-förmigen Überrollbügel aus entsprechend stabilen Rohren. Er kann aber auch, wie im Fall der eingangs zitierten DE 199 06 912 C1, aus einem Profilkörper, insbesondere einem Kastenprofil, bestehen, beispielsweise aus einem Al-Strangpreßprofil. Mit dem Überrollkörper 3 fest verbunden ist eine Traverse 4, an der ein Halteglied 5 mit einem Haltebolzen angebracht ist, der im Wirkeingriff mit einem Aktuator 6 steht, der im Bodenteil 1 a der Außenkassette untergebracht ist und der die Traverse 4 mit dem Überrollkörper 3 gegen die Kraft einer vorgespannten, nicht dargestellten, Antriebsfeder in der gezeichneten unteren Ruhelage hält sowie der sensorgesteuert im Gefahrenfall das Halteglied 5 freigibt.

Für die Ausbildung des Haltegliedes mit dem Haltebolzen und des Aktuators sind eine Reihe von Konstruktionen in einschlägigen Schriften beschrieben worden, wobei es insbesondere auf geringe Auslösekräfte und ein sicheres Wiedereinkoppeln des Haltebolzens in den Aktuator nach einer Auslösung ankommt. Vorzugsweise besteht der Aktuator aus einem Auslösemagneten mit einem Doppelhebelsystem 6 a und das Halteglied 5 aus einer nachgebend gelagerten Wippe oder anderen nachgebend ausgebildeten Elementen.

In der Außenkassette 1 ist weiterhin mindestens eine Führungsstange 7 für eine daran befestigte Kopfstütze 8 untergebracht, wobei die Kopfstütze 8 einen Hohlraum 9 zur Aufnahme des Überrollbügels 3 besitzt.

Die Führungsstange 7 der Kopfstütze 8 wird in der Außenkassette 1 in Führungen 10 und/oder mittels eines auf der Traverse 4 befestigten Elementes 11, dessen weitere Funktion später noch erläutert wird, geführt.

Die Führungsstange 7 steht über eine Kupplung 12 mit einer Zahnstange 13 in Verbindung, die dem Antrieb, d.h. dem kontinuierlichen Verstellen der Kopfstütze 8, dient. Die Kupplung 12 dient dem Toleranzausgleich zwischen den beiden Führungen 10 und 11, wobei grundsätzlich die Führungsstange 7 über die angesetzte Zahnstange 13 mittels der Führung 11 allein geführt werden kann. Die Führung 10 kann dann entfallen, ebenso der Toleranzausgleich mittels der Kupplung 12.

Die Kupplung 12 kann auch als Balken ausgeführt werden, um auseinanderliegende Führungsstangen 7 mit einem zentralen Antrieb zu verbinden.

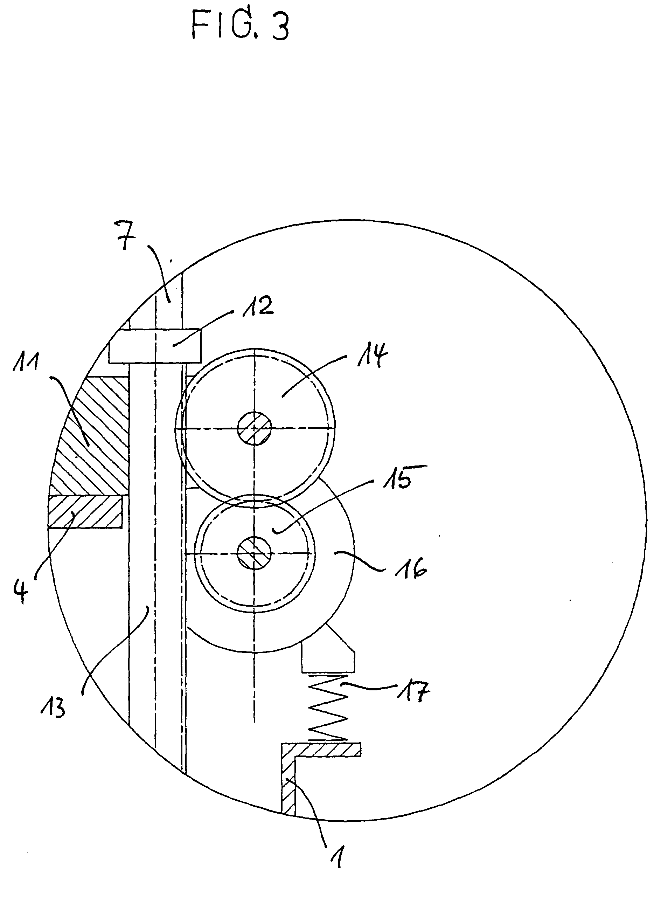

Zum Antrieb der Kopfstütze 8 über die Zahnstange 13 dient, wie auch die Fig. 3 zeigt, ein Zahnrad 14, welches in dem Element 11 gelagert ist. Dieses Element 11 hat daher neben einer Führungsfunktion für die Zahnstange 13 auch die Funktion einer Zahnradaufnahme für das Zahnrad 14.

Das Zahnrad 14 wird von einem Zahnrad 15 angetrieben, welches ortsfest an der Außenkassette gelagert ist. Dieses Zahznrad 15 kann direkt oder durch eine Kupplung oder eine flexible Welle mit einem E-Motor 16 verbunden sein. Falls erforderlich, kann der Toleranzausgleich zwischen den beiden Zahnrädern 14, 15 durch eine elastische Lagerung 17 des E-Motors oder durch die entsprechenden elastischen Kupplungen hergestellt werden.

Bei dem in Figur 1 dargestellten Zustand sind sowohl der Überrollbügel 3 als auch die Kopfstütze 8 eingefahren. Die Figur 2 zeigt die Verstellbewegung der Kopfstütze 8 im Normalbetrieb, d.h. ohne Auslösung des Überrollbügels. Durch Aktivierung des Elektromotors 16 aufgrund der Betätigung eines Schalters oder einer Taste durch den Fahrer treibt das mit dem Motor 16 gekoppelte Zahnrad 15 das Zahnrad 14 an, das wiederum im Wirkeingriff mit der Zahnstange 13 steht. Dadurch kann, in beiden Verstellrichtungen, die Kopfstütze 8 verstellt, d.h. der jeweiligen Körpergröße angepaßt werden, ohne daß der Überrollbügel 3 mitbewegt werden müßte. In der Fig. 2 ist dabei der Zustand mit der maximalen Ausfahrposition der Kopfstütze dargestellt (die Kupplung 12 liegt an der Führung 10, die insoweit einen Anschlag bildet, an). Durch den Hohlraum 9 in der Kopfstütze 8 bleibt bei der Aufstellbewegung der Kopfstütze stets der obere Teil des Überrollbügels 3 bedeckt.

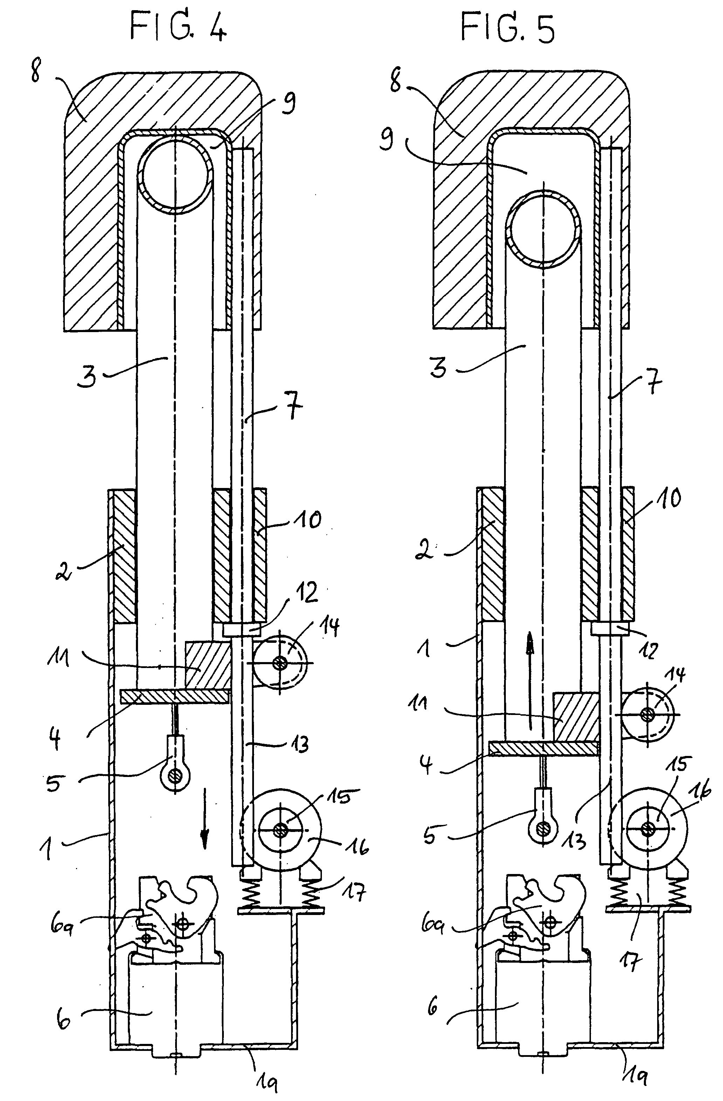

Die Fig. 5 zeigt den Beginn der Aufstellbewegung des Überrollbügels 3 im Gefahrenfall, und zwar in einem Zustand, in dem die Kopfstütze 8 entsprechend Fig. 2 voll ausgefahren ist.

Nachdem der Aktuator 6 von dem Überschlagsensor (nicht dargestellt) einen entsprechenden Impuls erhalten hat, öffnet er den Doppel-Hebel-Verschlußmechanismus 6 a. Dadurch wird der Haltebolzen des Haltegliedes 5 freigegeben und der Überrollbügel 3 wird samt Traversen 4 und Zahnradaufnahme/Führung 11 nach oben gefahren, vorzugsweise aufgrund vorgespannter Druckfedern oder anderer Energiespeicher. Das Zahnrad 14 wird dabei außer Wirkeingriff mit dem Zahnrad 15 gebracht und rollt frei auf der Zahnstange 13 der Kopfstützen-Antriebsstange 7 ab, bis der Überrollbügel 3 in mechanischen Kontakt mit der Kopfstütze 8 im Innern deren Hohlraum 9 kommt bzw. die Zahnradaufnahme 11 an der Kupplung 12 anschlägt.

Diese ausgefahrene Stellung des Überrollbügels 3 ist in der Fig. 4 dargestellt. Eine nicht gezeichnete Verriegelungseinheit üblicher Bauart sorgt dafür, daß der Überrollbügel gegen eine ungewollte Einfahrbewegung verriegelt ist.

Ist die Kopfstütze 8 zu Beginn der Auslösung eingefahren, entsprechend der Darstellung in Fig. 1, nimmt der Überrollbügel 3 die Kopfstütze 8, da er im Innern des Hohlraumes 9 am Punkt 18 direkt an der Kopfstütze anliegt, mit. Dadurch entfällt auch eine Abrollbewegung des Zahnrades 14 auf der Zahnstange 13, da keine Relativbewegung zwischen Überrollbügel 3 und Kopfstütze 8 ausgeführt wird. Es hebt lediglich das Zahnrad 14 von dem Zahnrad 15 ab. Sinngemäß erfolgt das Ausfahren des Überrollbügels 3 in Zwischenstellungen der Kopfstütze, die dann aufgenommen wird, wenn der Überrollbügel am Punkt 18 aufschlägt.

Nach einer Fehlauslösung bzw. einer gewollten Testauslösung kann der Überrollbügel 3, durch Aufbringen einer Kraft auf die Kopfstütze 8, von Hand eingeschoben werden. Beim Erreichen der unteren Endstellung wird das Halteglied 5 wieder in den Aktuator 6 eingekuppelt. Gleichzeitig wird das Zahnrad 14 wieder mit dem Zahnrad 15 in Eingriff gebracht.

Der Beginn dieses Reversiervorganges ist in Fig. 4 dargestellt.

Die Ausführungsform nach den Figuren 1 bis 5 zeigt, zusammenfassend dargestellt, einen elektrischen Antrieb einer separaten Kopfstütze in Verbindung mit einem Überroll-Schutzsystem, der die Funktion des Überrollbügels nicht behindert. Der Überrollbügel ist als "Notfallbügel" ausgeführt, d.h. der Bügel wird nur in Crashsituationen ausgelöst. Die Kopfstütze kann im Normalbetrieb beliebig verstellt werden und besitzt einen Hohlraum zur Aufnahme des Überrollbügels. Im Crashfall wird die Kopfstütze immer von dem Überrollbügel, bei dessen Ausfahrbewegung, mitbewegt. Die Kopplung des Elektromotors über zwei Zahnräder, von denen eines mechanisch mit dem Überrollbügel gekoppelt ist, erlaubt auf sehr einfache und demnach wirksame Weise ein Entkoppeln des Kopfstützenantriebes im Crashfall.

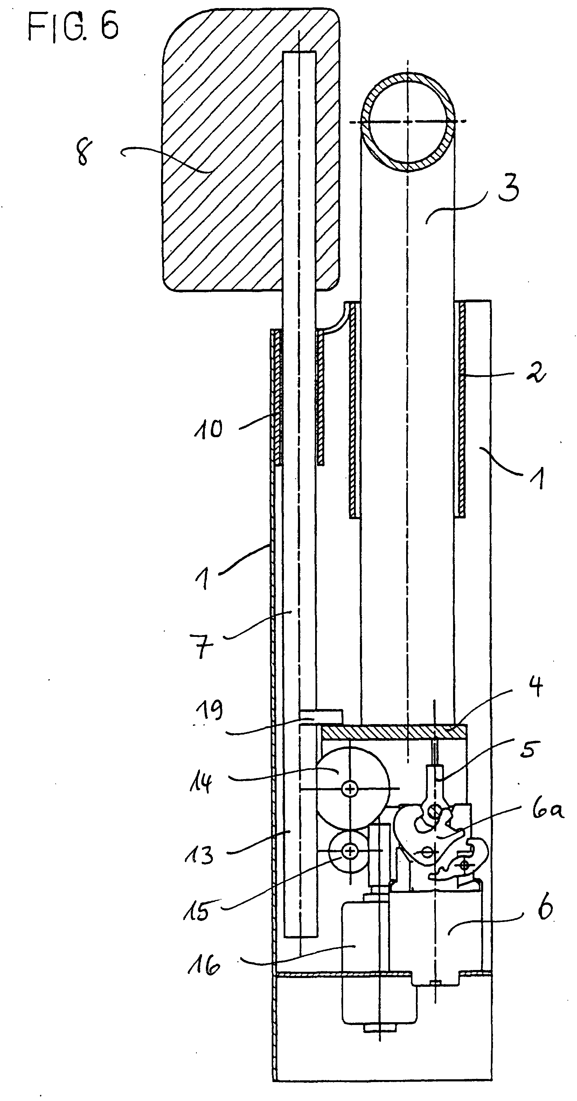

Bei der Ausführungsform nach den Figuren 1 bis 5 ist die Kopfstütze 8 in der Weise mit dem Überrollbügel integriert, daß ein Hohlraum 9 in der Kopfstütze 8 zur Aufnahme des Überrollbügels 3 ausgebildet ist. Die Fig. 6 zeigt einen alternativen Aufbau mit einer vor dem Überrollbügel 3 plazierten separaten Kopfstütze 8, die im "Kopfstützenbetrieb" beliebig verstellt werden kann. Im Crashfall wird die Kopfstütze automatisch durch die Ausfahrbewegung des Überrollbügels in ihre höchste Endstellung bewegt und verhindert dadurch einen möglichen Kopfaufprall der Insassen gegen den ungeschützten Überrollbügel.

Der Überrollbügel 3 wird in der gleichen Weise, wie anhand der Fig. 1 beschrieben, in der Außenkassette 1 mittels Führungen 2 geführt und ist mit der Traverse 4 verbunden, an der das Zahnrad 14 gelagert ist. Auch die Haltevorrichtung 5 in Verbindung mit dem Aktuator 6 ist entsprechend der Darstellung in Fig. 1 ausgebildet, ebenso das Antriebssystem 13 - 16. Vor dem Bügelrohr 3 ist insassenzugewandt die Kopfstützen-Führungsstange 7, die in der Kopfstütze 8 fest aufgenommen ist, in der Außenkassette 1, geführt durch entsprechende Führungen 10, längsverschiebbar aufgenommen. Der untere Teil der Kopfstützen-Führungsstange 7 weist ein Zahnsegment 13 auf, das entweder durch eine direkt in die Führungsstange 7 eingearbeitete Verzahnung oder durch eine entsprechend angebaute Zahnstange realisiert werden kann, was auch für die Ausbildung der Führungsstange 7, 13 in Fig. 1 gilt. An der Kopfstützen-Führungsstange 7 bzw. dem zugehörigen Zahnsegment 13 ist ein Mitnehmer 19 fest angebracht.

Wird nun der Überrollbügel 3 durch ein entsprechendes Steuersignal ausgelöst, so wird die Kopfstütze 8 über den Mitnehmer 19 während der Aufwärtsbewegung des Überrollbügels 3, durch diesen über die Traverse 4 mitgenommen.

Bei dem Reversiervorgang des Überrollbügels 3 rollt das Zahnrad 14 an der Verzahnung 13 der Kopfstützenführung 7 ab. Beim Erreichen der unteren Endstellung des Überrollbügels 3 wird das Halteglied 5 wieder in den Aktuator 6 eingekoppelt. Gleichzeitig wird das Zahnrad 14 wieder mit dem Antriebszahnrad 15 in Eingriff gebracht.

Die Bewegungsbahn der Kopfstütze 8 sowie des Überrollbügels 3 kann sowohl, wie dargestellt, geradlinig als auch in bekannter Weise kurvenförmig erfolgen.

## Patentansprüche

1. Überroll-Schutzsystem für Kraftfahrzeuge in Kassettenbauweise, das jeweils einem Fahrzeugsitz zugeordnet ist, mit
- einem länglichen Überrollkörper (3), der in einer fahrzeugfest angebrachten Außenkassette (1) zwischen einer unteren Ruhestellung und einer oberen Schutzstellung längsverschiebbar aufgenommen ist und ein Halteglied (5) aufweist, das in der Ruhestellung in lösbarer Wirkverbindung mit einem sensorgesteuerten Auslösesystem (6, 6 a) steht,
- einer mit dem Überrollkörper (3) integrierten Kopfstütze (8), die an mindestens einer Führungsstange (7) angebracht ist, die parallel zur Längsrichtung des Überrollkörpers (3) ebenfalls längsverschiebbar in der Außenkassette (1) aufgenommen ist, **dadurch gekennzeichnet, daß** der Kopfstütze (8) ein zusätzliches elektrisches Antriebssystem (16) zum kontinuierlichen Verfahren der Kopfstütze (8) unabhängig von der Verstellung des Überrollkörpers (3) zugeordnet ist, das einen an der Außenkassette (1) angebrachten Elektromotor (16) aufweist, auf dessen Antriebswelle ein erstes Zahnrad (15) angebracht ist, das mit einem zweiten Zahnrad (14) entkoppelbar kämmt, das mit dem Überrollkörper (3) verbunden ist und mit einem an der Führungsstange (7) ausgebildeten Zahnsegment (13) im Wirkeingriff steht.

2. Überroll-Schutzsystem nach Anspruch 1, bei dem die Kopfstütze (8) einen Hohlraum (9) zur Aufnahme des oberen Teiles des Überrollkörpers (3) aufweist, dessen axiale Tiefe so bemessen ist, daß die Kopfstütze (8) in der Ruhestellung ohne Beeinträchtigung durch den Überrollbügel (3) in ihre unterste Position verfahrbar ist.

3. Überroll-Schutzsystem nach Anspruch 1, bei dem die Kopfstütze (8) mit ihrer Führungsstange (7) insassenzugewandt vor dem Überrollkörper (3) angeordnet ist und ein Mitnehmerelement (19) vorgesehen ist, derart, daß durch die Aufstellbewegung des Überrollkörpers (3) die Kopfstütze (8) in die obere Endstellung verfahrbar ist (Figuren 1 - 5).

4. Überroll-Schutzsystem nach einem der Ansprüche 1 bis 3, bei dem das erste Zahnrad (15) elastisch nachgebend auf der Antriebswelle des Elektromtors (16) gelagert ist (Fig. 6).

5. Überroll-Schutzsystem nach einem der Ansprüche 1 bis 3, bei dem das erste Zahnrad (15) fest auf der Antriebswelle des Elektromotors (16) angebracht und der Elektromotor elastisch an der Außenkassette (1) gelagert ist.

6. Überroll-Schutzsystem nach einem der Ansprüche 1 bis 5, bei dem die Führungsstange (7) im unteren Abschnitt eine in der Stange einstückig ausgeformte Zahnreihe als Zahnsegment (13) aufweist.

7. Überroll-Schutzsystem nach einem der Ansprüche 1 bis 5, bei dem an der Führungsstange (7) im unteren Abschnitt eine separate Zahnstange als Zahnsegment (13) angebracht ist.

8. Überroll-Schutzsystem nach einem der Ansprüche 1 bis 7, bei dem an dem unteren Ende des Überrollkörpers (3) eine Traverse (4) angebracht ist, die sich über die Breite des Überrollkörpers (3) erstreckt und an der das zweite Zahnrad (14) gelagert und das Halteglied (5) befestigt ist, wobei das Auslösesystem (6, 6 a) fahrzeugfest in der Außenkassette (1) angebracht ist.

## Claims

1. A roll-over protection system of the cassette design for motor vehicles, which is assigned to each seat of a motor vehicle, comprising
- an elongate roll-over body (3) which is received in an outer cassette (1), which is fixed to the vehicle, in such a manner as to be longitudinally displaceable between a lower, resting position and an upper, protecting position and which has a retaining member (5) which in the resting position is in disengageable operative connection with a sensor-controlled release system (6, 6a),
- a headrest (8) which is integral with the roll-over body (3) and which is mounted on at least one guide rod (7) which is likewise received in the outer cassette (1) in a longitudinally displaceable manner parallel to the longitudinal direction of the roll-over body (3),
**characterised in that** there is associated with the headrest (8) an additional electrical drive system (16) for continuous displacement of the headrest (8) independently of the movement of the roll-over body (3), which drive system (16) has an electric motor (16) which is mounted on the outer cassette (1) and on the drive shaft of which a first gear wheel (15) is mounted which disengageably meshes with a second gear wheel (14) which is connected to the roll-over body (3) and is in operative engagement with a toothed segment constructed on the guide rod (7).

2. A roll-over protection system according to claim 1, in which the headrest (8) has a cavity (9) for receiving the upper portion of the roll-over body (3), the axial depth of which cavity (9) is such that, in the resting position, the headrest (8) can be moved into its lowest position without being impeded by the roll-over body (3).

3. A roll-over protection system according to claim 1, in which the headrest (8) is arranged with its guide rod (7) in front of the roll-over body (3) and towards an occupant, and a driving element (19) is provided in such a manner that the headrest (8) can be moved into the upper end position by the positioning movement of the roll-over body (3) (Figures 1 to 5).

4. A roll-over protection system according to any one of claims 1 to 3, in which the first gear wheel (15) is supported on the drive shaft of the electric motor (16) in a resiliently yielding manner (Fig. 6).

5. A roll-over protection system according to any one of claims 1 to 3, in which the first gear wheel (15) is rigidly mounted on the drive shaft of the electric motor (16) and the electric motor is resiliently supported on the outer cassette (1).

6. A roll-over protection system according to any one of claims 1 to 5, in which the guide rod (7) has in the lower portion a row of teeth which is integrally formed in the rod as the toothed segment (13).

7. A roll-over protection system according to any one of claims 1 to 5, in which a separate toothed rack is mounted on the guide rod (7) in the lower portion as the toothed segment (13).

8. A roll-over protection system according to any one of claims 1 to 7, in which a cross-piece (4) is mounted at the lower end of the roll-over body (3), which cross-piece (4) extends over the width of the roll-over body (3) and on which the second gear wheel (14) is supported and the retaining member (5) is fastened, the release system (6, 6a) being fixed to the vehicle in the outer cassette (1).

## Revendications

1. Système de protection en cas de retournement pour véhicules automobiles sous forme de cassette, qui est associé respectivement à un siège du véhicule automobile
- avec un corps de protection en cas de retournement (3) de forme allongée, qui est logé avec une possibilité de coulissement dans le sens longitudinal entre une position inférieure de repos et une position supérieure de protection dans une cassette extérieure (1) disposée en solidarité avec le véhicule et qui comprend un élément de maintien (5) qui, dans la position de repos, est en liaison active amovible avec un système de déclenchement (6, 6a) commandé par un capteur
- et avec un appui-tête (8) intégré dans le corps de protection en cas de retournement (3) et qui est placé sur au moins une barre de guidage (7), laquelle est logée parallèlement à la direction longitudinale du corps de protection en cas de retournement (3) et également avec une possibilité de coulissement dans le sens longitudinal dans la cassette extérieure (1), **caractérisé en ce qu'**à l'appui-tête (8) est associé un système électrique d'entraînement supplémentaire (16) pour le déplacement en continu de l'appui-tête (8) indépendamment du réglage du corps de protection en cas de retournement (3), lequel comprend un moteur électrique (16) placé sur la cassette extérieure (1) et sur l'arbre d'entraînement duquel est disposée une première roue dentée (15) qui est en prise pouvant être découplée avec une deuxième roue dentée (14), laquelle est reliée avec le corps de protection en cas de retournement (3) et est en prise active avec un segment denté (13) formé sur la barre de guidage (7).

2. Système de protection en cas de retournement selon la revendication 1, dans lequel l'appui-tête (8) comprend une cavité (9) qui est destinée à recevoir la partie supérieure du corps de protection en cas de retournement (3) et dont la profondeur axiale est dimensionnée de telle façon que, dans la position de repos, l'appui-tête (8) peut être déplacé dans sa position la plus basse sans être gêné par l'arceau de protection en cas de retournement (3).

3. Système de protection en cas de retournement selon la revendication 1, dans lequel l'appui-tête (8) et sa barre de guidage (7) sont disposés devant le corps de protection en cas de retournement (3) en étant dirigés vers les passagers et en ce qu'un élément d'entraînement (19) est prévu, de sorte que l'appui-tête (8) peut être déplacé dans la position extrême supérieure par le mouvement d'érection du corps de protection en cas de retournement (3) (figures 1-5).

4. Système de protection en cas de retournement selon l'une quelconque des revendications 1 à 3, dans lequel la première roue dentée (15) est logée de manière souple sur l'arbre d'entraînement du moteur électrique (16) (figure 6).

5. Système de protection en cas de retournement selon l'une quelconque des revendications 1 à 3, dans lequel la première roue dentée (15) est logée de manière fixe sur l'arbre d'entraînement du moteur électrique (16) et en ce que le moteur électrique est logé de manière souple sur la cassette extérieure (1).

6. Système de protection en cas de retournement selon l'une quelconque des revendications 1 à 5, dans lequel la barre de guidage (7) comprend, dans la section inférieure, en tant que segment denté (13), une rangée de dents formée d'une seule pièce dans la barre.

7. Système de protection en cas de retournement selon l'une quelconque des revendications 1 à 5, dans lequel une crémaillère séparée est placée en tant que segment denté (13) à la section inférieure de la barre de guidage (7).

8. Système de protection en cas de retournement selon l'une quelconque des revendications 1 à 7, dans lequel l'extrémité inférieure du corps de protection en cas de retournement (3) est placée une traverse (4), laquelle s'étend sur la largeur du corps de protection en cas de retournement (3) et sur laquelle est logée la deuxième roue dentée (14) et est fixé l'élément de maintien (5), le système de déclenchement (6, 6a) étant placé en solidarité avec le véhicule dans la cassette extérieure (1).
